# EUROPEAN PATENT APPLICATION

(11) **EP 4 553 763 A1**
(43) Date of publication of application: **14.05.2025**
(21) Application number: 24211180.5
(22) Date of filing: 06.11.2024
(51) Int. Cl.: G06T 7/11

(54) **SYSTEMS AND METHODS FOR GENERATING AND USING TRAINING DATA**

(30) Priority: 08.11.2023 AU 2023903586
(71) Applicant: Canva Pty Ltd., Sydney, New South Wales 2010 (AU)
(72) Inventor: LI, Haitao, Sydney, 2010 (AU)
(74) Representative: Chettle, John Edward

(57) **Abstract**

There is provided a method comprising forming a training dataset for a machine learning model by a) receiving a first intent object and two or more design snapshots associated with the first intent object, wherein the first intent object indicates an intended design outcome and the two or more design snapshots include at least a first design snapshot indicating an initial state of a design and a second design snapshot indicating a state of the design after the intended design outcome is achieved; b) identifying one or more design edits made to the design based on the first design snapshot and the second design snapshot; and c) generating a training datapoint based on the intent object and the identified one or more design edits. There is also provided a computer processing system and a computer readable storage medium storing instructions executable by processing unit.

## Description

### TECHNICAL FIELD

Aspects of the present disclosure are directed to machine learning models and more particularly to systems and methods for generating and using training data to train a machine learning model.

### BACKGROUND

Various computer applications for creating and publishing digital designs exist. Generally speaking, such applications allow users to create a design by, for example, creating one or more pages and adding design elements, such as text, images, audios, videos, etc., to that page.

Often such applications provide a number of design templates in various design categories to aid users in creating designs. Users can select a design template from the available templates and customize it to create their own design, by e.g., customizing or changing one or more of the design elements available in the design template.

However, if a user is not skilled in generating designs, it may often be difficult for a user to create or edit a digital design.

### SUMMARY

Described herein is a method comprising forming a training dataset for a machine learning model by: a) receiving an intent object and two or more design snapshots associated with the intent object, wherein the intent object indicates an intended design outcome and the two or more design snapshots include at least a first design snapshot indicating an initial state of a design and a second design snapshot indicating a state of the design after the intended design outcome is achieved; b) identifying one or more design edits made to the design based on the first design snapshot and the second design snapshot; and c) generating a training datapoint based on the intent object and the identified one or more design edits.

In some embodiments, the method further comprises repeating steps a)-c) multiple times for the same design to generate a sequence of the training datapoints, where each datapoint in the sequence is associated with the same design. In other embodiments, multiple sequences of the training datapoints are generated for different designs. In some embodiments, steps a)-c) are repeated multiple times for the same intent object.

Training datapoint may further include a motivation descriptor indicating a motivation for making the one or more design edits to the design.

Forming the training dataset for the machine learning model further includes: receiving a second intent object associated with the second design snapshot and a third design snapshot; determining a third intent object based on a combination of the first intent object and the second intent object; and associating with the third intent object the first design snapshot and the third design snapshot, wherein each of the first, second and third intent objects and their associated snapshots are included in the training dataset.

The method may further include determining design edits associated with each of the first, second and third intent objects, where determining the design edits for each intent object is based on the design snapshots associated with that intent object. The third intent object may be determined by an ML model in some embodiments. Further, the third intent object may be a higher level intent object than at least one of the first intent object and the second intent object.

The training dataset may used for training an ML model to output one or more design commands based on an input intent object. Alternatively, or in addition the training dataset may be used for training an ML model to output one or more design edits based on an input intent object.

The method may further include: retrieving a first training datapoint and a second training datapoint from the sequence of training datapoints, the first training datapoint including the first intent object and the first and second design snapshots and the second training datapoint including a second intent object and third and fourth design snapshots; combining the first intent object with the second intent object to generate a third intent object; associating with the third intent object the first design snapshot and the fourth design snapshot; and generating an additional training datapoint to include in the sequence of training datapoints, the additional training datapoint including the third intent object and the first design snapshot and fourth design snapshot.

Also described herein is a computer-implemented method comprising: forming a training dataset for a machine learning model by a method including: receiving a first intent object associated with a first design snapshot and a second design snapshot; receiving a second intent object associated with the second design snapshot and a third design snapshot; determining a third intent object based on a combination of the first and second intent objects; and associating with the third intent object the first design snapshot and the third design snapshot, wherein each of the first, second and third intent objects and their associated snapshots are included in the training dataset.

Further described herein is a computer implemented method comprising: forming a training dataset for a machine learning model by: a) receiving an intent object and two or more design snapshots associated with the intent object, wherein the intent object indicates an intended design outcome and the two or more design snapshots include at least a first design snapshot indicating an initial state of a design and a second design snapshot indicating a state of the design after the intended design outcome is achieved; and b) generating a training datapoint including the intent object and the two or more design snapshots.

Further still, disclosed herein a computer readable medium comprising instructions, which when executed by a processing unit of a computer processing system cause the computer processing system to perform any one of the above methods.

### BRIEF DESCRIPTION OF THE DRAWINGS

In the drawings:
FIG. 1 is a diagram depicting a networked environment in which various features of the present disclosure may be implemented.
FIG. 2 is a block diagram of a computer processing system configurable to perform various features of the present disclosure.
Fig. 3 is a flowchart depicting an example method for training an ML model.
FIG. 4 is a flowchart depicting an example method for generating training data according to some embodiments of the present disclosure.
Fig. 5 is a flowchart depicting another example method for generating training data according to some aspects of the present disclosure.
Fig. 6 is a flowchart depicting an example method for augmenting the training data according to some embodiments of the present disclosure.
Fig. 7 depicts an example graphical user interface for generating and/or receiving training data.
Fig. 8A depicts another example graphical user interface for triggering the method of fig. 5.
Fig. 8B depicts an example graphical user interface for commencing a snapshot mode according to some embodiments of the present disclosure.
Fig. 8C depicts an example graphical user interface for generating a design in the snapshot mode according to some embodiments of the present disclosure.
Fig. 8D depicts an example graphical user interface for obtaining summary details for a design according to some embodiments of the present disclosure.
Fig. 8E depicts an example graphical user interface when a user takes a snapshot according to some embodiments of the present disclosure.
Fig. 8F depicts an example graphical user interface for viewing design snapshots according to some embodiments of the present disclosure.
Fig. 8G depicts an example graphical user interface for editing design snapshots according to some embodiments of the present disclosure.

While the description is amenable to various modifications and alternative forms, specific embodiments are shown by way of example in the drawings and are described in detail. It should be understood, however, that the drawings and detailed description are not intended to limit the invention to the particular form disclosed. The intention is to cover all modifications, equivalents, and alternatives falling within the scope of the present invention as defined by the appended claims.

### DETAILED DESCRIPTION

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obscuring.

Generally speaking, aspects of the present disclosure are utilized in systems and methods for creating digital designs. In particular, the techniques disclosed herein are described in the context of a computer system that is configured to facilitate the creation of digital designs. By way of example, and generally speaking, the computer system may provide user interfaces that allow a user to create and edit a digital design by adding, deleting, or modifying design elements (such as graphics and/or text) in a design template.

As described previously, most digital design computer applications present a plethora of design templates and design elements to users in various design categories. They also provide a design editor tool that allows users to generate designs by selecting design templates and design elements and then modifying the design elements (e.g., changing font type, size and color, changing design elements (e.g., images, videos etc.), moving design elements around, etc.).

In case a computer application offers hundreds of thousands of templates and designs and increasing flexibility to modify or edit designs, users may find the task of creating or modifying a design for their desired purpose to be challenging. For example, a novice user may find it challenging to create a professional looking design that is suitable for client presentations. In other cases, a user may not be aware of the various features of the design application and therefore may be unable to utilize the editor tool to its full potential to achieve a desired result. These types of situations may result in the creation of unsuitable or substandard digital designs.

Further still, even if a user is adept at using a design application and creating designs, the user may have to perform numerous steps to create the design, including e.g., perusing a plethora of design templates, selecting a design template, and performing several design edits (such as adding, deleting, moving design elements) to the design template to achieve a design intent. This can be tedious, result in a number of additional computation steps, and increase the cognitive burden on the user.

To aid with one or more of the above-identified issues, aspects of the present disclosure provide systems, methods, and/or computer readable media that are configured to train a machine learning (ML) model such that the ML model is able to output a set of design edits based on an input intent object (or user prompt). The set of design edits can subsequently be used to generate editing commands to an editor tool of a design application to automatically generate or modify a digital design based on the intent object or user prompt.

In particular, embodiments of the present disclosure are directed to systems and/or methods for generating training data for training such ML models. In some embodiments, the training data includes a plurality of raw training datapoints. Each raw training datapoint includes an intent object that describes the intended edits to be made to a design and/or motivation for the edits (e.g., "restructure the elements in the middle of the design to make the design look more professional") and two design snapshots that represent the state of the design before and after edits are made to the design.

In some embodiments, the raw training datapoints are received from client devices associated with users. In some examples, the intent objects are created by the users on the client devices. In other examples, the intent objects are provided to the client devices by a training system.

The raw training datapoints may be generated in various ways. In some embodiments, sequential raw training datapoints may be generated when a user (e.g., an experienced designer) generates or modifies a design. In these embodiments, the user may create their own intent object(s) when generating or modifying the design. For example, a user may generate a number of intent objects during the process of design creation where each intent object describes the intended edits to be made to the design and/or indicates the motivation for any design changes made by the user. Further, the user records design snapshots at particular moments of time during the design creation process. If the user generates a design from scratch, an empty design or a design template may be considered the first design snapshot. Then as the user modifies the empty design or design template to meet a given intent object, the user may record a snapshot of the design to capture the state of the design once that intent object has been met. The user may do so sequentially for all intent objects associated with that design and take snapshots at particular moments of time when corresponding intent objects have been met (e.g., after the user has changed the background color, added a design element, changed a font size or color, etc.).

In addition to creating intent objects and taking design snapshots, the user may describe "actions" performed by the designer to fulfil corresponding intents. These actions may be associated with corresponding design snapshots. For example, if an example intent object is "design a birthday card for my friend Mary", the actions described by the designer may include "generate a new blank design, add a birthday themed template ID, and add a basic birthday message".

The ML training systems and methods disclosed herein may receive the intent object(s) and associated snapshots for the given design and generate individual raw training datapoints based on pairs of intent objects and corresponding before and after design snapshots. It will be appreciated that by collecting sequential raw training datapoints associated with the designing process for a design, the training data can train the ML model to learn better reasoning about design logic.

In another embodiment, the design snapshots may be generated when multiple users (e.g., experienced designers) are provided an initial snapshot of a design and instructed to modify the initial snapshot. In some examples, an intent object may be provided and the users may be instructed to modify the initial snapshot based on the provided intent object. In other examples, users may select their own intent object(s) and modify the initial snapshot based on their own selected intent object(s). As the users modify the initial design snapshot, they may generate design snapshots as corresponding intent objects are met. The snapshots may also be associated with actions and/or metadata.

The systems and methods disclosed herein receive the intent object(s) and snapshots from the various users and generate individual raw training datapoints based on pairs of intent objects and corresponding before and after design snapshots. It will be appreciated that by collecting different design snapshots for the same intent object from multiple different sources, aspects of the present disclosure can increase the diversity of the training data such that the ML model can learn that the same intent object can result in multiple different types of edits.

Further still, according to aspects of the present disclosure, the generated raw training datapoints can be used to automatically generate additional raw training datapoints. This way, a small set of datapoints can be augmented to generate millions if not billions of raw training datapoints. In some embodiments, additional raw training datapoints can be generated by applying different permutations and combinations to combine two or more intent objects associated with a design. For example, if a design has a sequence of 6 raw training datapoints (and therefore six intent objects), the systems and methods may generate various combinations of the six intent objects. The systems and methods may then aggregate the combinations of two or more intent objects to generate additional intent objects. For example, intent objects 'Add cute illustrations that match the topic' and `give the text a handwritten style' can be aggregated to generate a higher level intent object such as `Make the design more cute and personalized'). The systems and methods may then utilize design snapshots associated with the intent objects utilized to create the higher level intent objects (e.g., the before snapshot associated with the 'Add cute illustrations that match the topic' intent object and the after snapshot associated with the `give the text a handwritten style' intent object) to associate before and after snapshots with the higher level intent objects.

In some embodiments, the raw training datapoints are used to train an ML model. In other embodiments, the raw training datapoints are converted into synthesized training datapoints and the synthesized training datapoints are used to train an ML model. Each synthesized training datapoint includes the intent object that describes the intended edits to be made to a design and/or motivation for the edits and one or more design edits made to the design to achieve the intent (e.g., `make the sale details stand out', `add some vibrant organic shapes to fill the gaps', or `position text boxes at the top and bottom of the page'). The one or more design edits for a synthesized training datapoint can be derived from differences between the design snapshots associated with a corresponding raw training datapoint.

In this way, the presently disclosed systems and methods generate diverse training data for training an ML model and automatically augment that training data to increase the diversity and volume of the training data. The fully trained ML model can then be used to receive a user prompt (or intent object) and output a set of design edits. The output set of design edits can be provided to an editor tool to automatically edit or generate a design that matches the user prompt (or intent object) based on the set of design edits.

These and other aspects of the present disclosure will now be described with reference to the following figures.

### Network architecture and system

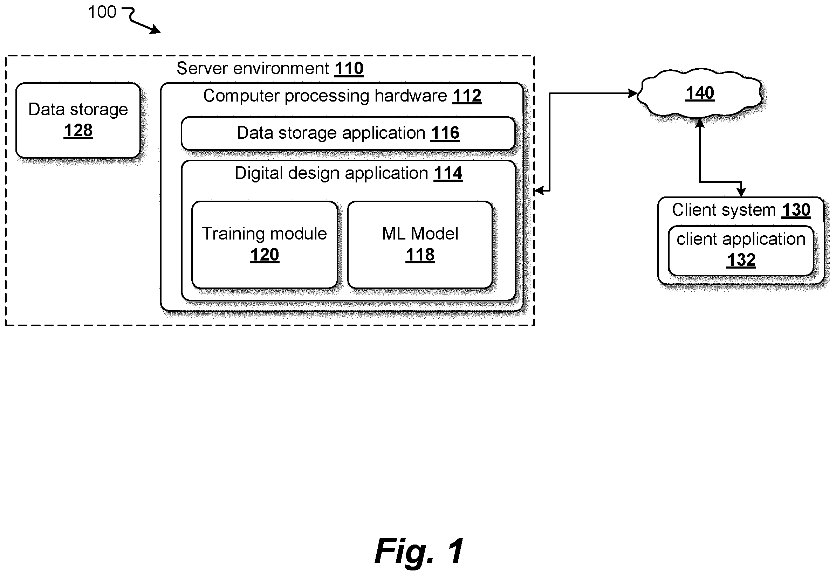

FIG. 1 is a diagram depicting a networked environment in which various features of the present disclosure may be implemented.

Embodiments of the present disclosure are described with reference to a digital design platform 100 which includes server- and client-side applications which operate together to perform the processing described herein.

The digital design platform 100 includes a server environment 110 and a client system 130 which communicate via one or more communications networks 140 (e.g. the Internet).

Generally speaking, the server environment 110 includes computer processing hardware 112 (discussed below) on which applications that provide server-side functionality to client applications such as client application 132 (described below) execute. In the present example, the server environment 110 includes a digital design application 114 (which may also be referred to as a front end server application), and a data storage application 116.

The digital design application 114 may execute to provide a client application endpoint that is accessible over the communications network 140. For example, where the digital design application 114 serves web browser client applications the digital design application 114 will be hosted by a web server which receives and responds (for example) to HTTP requests. Where the digital design application 114 serves native client applications, the digital design application 114 may be hosted by an application server configured to receive, process, and respond to specifically defined API calls received from those client applications. The server environment 110 may include one or more web server applications and/or one or more application server applications allowing it to interact with both web and native client applications.

Generally speaking, the digital design application 114 facilitates various functions related to creating and editing designs in the digital design platform 100. This may include, for example, creating, editing, storing, searching, retrieving, and/or viewing designs. The digital design application 114 may also facilitate additional functions that are typical of server systems - for example user account creation and management, user authentication, and/or other server side functions. Each of these functionalities may be provided by individual applications, e.g., an account management application (not shown) for account creation and management, a design creation application (not shown) to aid users in creating, editing, storing designs, a management application (not shown) that is configured to maintain and store design templates and media items in the data storage, etc.

In addition to these applications, the digital design application 114 includes an ML model 118, and a training module 120. The ML model 118 may be trained to receive one or more input user prompts (also referred to as intents herein) and output one or more design edits to be performed by a design editor tool (not shown) to generate or modify a design based on the input user prompt(s). The training module 120 may be configured to generate training data, augment the generated training data, and train the ML model 118 based on the generated and augmented training data until the ML model 118 can generate output design edits that sufficiently accurately match a given intent or user prompt. Operations of these modules will be described in more detail later.

Although the ML model 118 is depicted as part of the digital design application, in some embodiments, the ML model 118 may be an independent application hosted by a different server environment.

The data storage application 116 executes to receive and process requests to persistently store and retrieve data relevant to the operations performed/services provided by the digital design application 114. Such requests may be received from the digital design application 114 and/or (in some instances) directly from client applications such as 132. Data relevant to the operations performed/services provided by the digital design application 114 may include, for example, user account data, user design data (i.e., data describing designs that have been created by users), design template data (e.g., templates that can be used by users to create designs), media item data (e.g. data in respect of stock media items that users may add to designs), and/or other data relevant to the operation of the server environment 110. In addition, the data includes training data required to train the ML model 118. The training data includes multiple training datapoints. Each training datapoint includes an intent object and two design snapshots. The training datapoints may be organized in the training dataset in two different ways - 1) multiple training datapoints may be stored in sequence per design, and multiple training datapoints may be stored that relate to the same intent object. By storing data in these different manners the training dataset can be effectively used when training the models - e.g., the sequential training datapoints can help train the ML model to understand or learn design logic required in creating or modifying a design and the multiple training datapoints per intent object can help increase the diversity of the trained ML model such that it can provide multiple different design edit options for a single user prompt.

The data storage application 116 may, for example, be a relational database management application or an alternative application for storing and retrieving data from data storage 128. Data storage 128 may be any appropriate data storage device (or set of devices), for example one or more non-transitory computer readable storage devices such as hard disks, solid state drives, tape drives, or alternative computer readable storage devices.

In server environment 110, the digital design application 114 persistently stores data to data storage 128 via the data storage application 116. In alternative implementations, however, the digital design application 114 may be configured to directly interact with data storage devices such as 128 to store and retrieve data (in which case a separate data storage application 116 may not be needed). Furthermore, while a single data storage application 116 is described, server environment 110 may include multiple data storage applications. For example one data storage application 116 may be used for user account data, another for design data, another for ML training data, and so forth. In this case, each data storage application 116 may interface with one or more shared data storage devices and/or one or more dedicated data storage devices, and each data storage application may receive/respond to requests from various server-side and/or client-side applications (including, for example digital design application 114).

As noted, the digital design application 114 runs on (or are executed by) computer processing hardware 112. Computer processing hardware 112 includes one or more computer processing systems. The precise number and nature of those systems will depend on the architecture of the server environment 110.

For example, in one implementation each digital design application 114 may run on its own dedicated computer processing system. In another implementation, two or more digital design applications 114 may run on a common/shared computer processing system. In a further implementation, server environment 110 is a scalable environment in which application instances (and the computer processing hardware 112 - i.e. the specific computer processing systems required to run those instances) are commissioned and decommissioned according to demand - e.g., in a public or private cloud-type system. In this case, server environment 110 may simultaneously run multiple instances of each application (on one or multiple computer processing systems) as required by client demand. Where server environment 110 is a scalable system it will include additional applications to those illustrated and described. As one example, the server environment 110 may include a load balancing application (not shown) which operates to determine demand, direct client traffic to the appropriate design application instance 114 (where multiple design applications 114 have been commissioned), trigger the commissioning of additional server environment applications (and/or computer processing systems to run those applications) if required to meet the current demand, and/or trigger the decommissioning of server environment applications (and computer processing systems) if they are not functioning correctly and/or are not required for current demand.

Communication between the applications and computer processing systems of the server environment 110 may be by any appropriate means, for example direct communication or networked communication over one or more local area networks, wide area networks, and/or public networks (with a secure logical overlay, such as a VPN, if required).

The present disclosure describes various operations that are performed by applications of the server environment 110. Generally speaking, however, operations described as being performed by a particular application (e.g., training module 120) could be performed by one or more alternative applications, and/or operations described as being performed by multiple separate applications (e.g., design creation application and management application) could in some instances be performed by a single application.

Client system 130 hosts a client application 132 which, when executed by the client system 130, configures the client system 130 to provide client-side functionality/interact with server environment 110 (or, more specifically, the digital design application 114). Via the client application 132, and as discussed in detail below, a user can access the various techniques described herein - e.g., the user create or modify designs, generate intent objects and record design snapshots when creating or modifying the designs, receive intent objects and initial design snapshots and generate additional snapshots based on the initial design snapshots and corresponding intent objects. Client application 132 may also provide a user with access to additional design related operations, such as creating, editing, saving, publishing, sharing, and/or other design related operations. Further still, the client application 132 may be configured to create training datapoints based on the intent objects and corresponding design snapshots and communicate these training datapoints to the design application 114 and in particular the training module 120.

The client application 132 may be a general web browser application which accesses the digital design application 114 via an appropriate uniform resource locator (URL) and communicates with the digital design application 114 via general world-wide-web protocols (e.g. HTTP, HTTPS, FTP). Alternatively, the client application 132 may be a native application programmed to communicate with digital design application 114 using defined application programming interface (API) calls and responses.

A given client system such as 130 may have more than one client application 132 installed and executing thereon. For example, a client system 130 may have a (or multiple) general web browser application(s) and a native client application.

The present disclosure describes some method steps and/or processing as being performed by the client application 132. In certain embodiments, the functionality described may be natively provided by the client application 132 (e.g. the client application 132 itself has instructions and data which, when executed, cause the client application 132 to perform the described steps or functions). In alternative embodiments, the functionality described herein may be provided by a separate software module (such as an add-on or plug-in) that operates in conjunction with the client application 132 to expand the functionality thereof.

While the embodiments described below make use of a client-server architecture, the techniques and processing described herein could be adapted to be executed in a stand-alone context - e.g. by an application (or set of applications) that run on a computer processing system and can perform all required functionality without need of a server environment or application.

### Computer system

As noted, the techniques and operations described herein are performed by one or more computer processing systems.

By way of example, client system 130 may be any computer processing system which is configured (or configurable) by hardware and/or software - e.g. client application 132 - to offer client-side functionality. A client system 130 may be a desktop computer, laptop computer, tablet computing device, mobile/smart phone, or other appropriate computer processing system.

Similarly, the applications of server environment 110 are also executed by one or more computer processing systems. Server environment computer processing systems will typically be server systems, though again may be any appropriate computer processing systems.

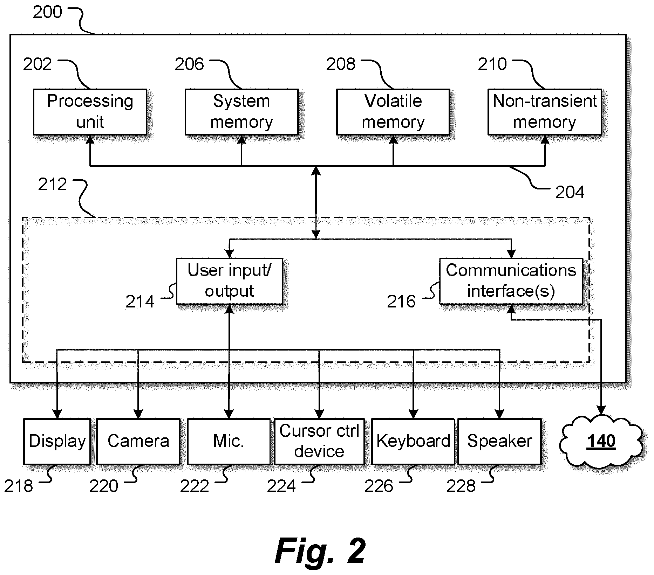

FIG. 2 provides a block diagram of a computer processing system 200 configurable to implement embodiments and/or features described herein. System 200 is a general purpose computer processing system. It will be appreciated that FIG. 2 does not illustrate all functional or physical components of a computer processing system. For example, no power supply or power supply interface has been depicted, however system 200 will either carry a power supply or be configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

Computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and useable (either in a shared or dedicated manner) by system 200.

Through a communications bus 204 the processing unit 202 is in data communication with a one or more machine readable storage (memory) devices which store computer readable instructions and/or data which are executed by the processing unit 202 to control operation of the processing system 200. In this example system 200 includes a system memory 206 (e.g. a BIOS), volatile memory 208 (e.g. random access memory such as one or more DRAM modules), and non-transitory memory 210 (e.g. one or more hard disk or solid state drives).

System 200 also includes one or more interfaces, indicated generally by 212, via which system 200 interfaces with various devices and/or networks. Generally speaking, other devices may be integral with system 200, or may be separate. Where a device is separate from system 200, connection between the device and system 200 may be via wired or wireless hardware and communication protocols, and may be a direct or an indirect (e.g. networked) connection.

Generally speaking, and depending on the particular system in question, devices to which system 200 connects - whether by wired or wireless means - include one or more input devices to allow data to be input into/received by system 200 and one or more output devices to allow data to be output by system 200. Example devices are described below, however it will be appreciated that not all computer processing systems will include all mentioned devices, and that additional and alternative devices to those mentioned may well be used.

For example, system 200 may include or connect to one or more input devices by which information/data is input into (received by) system 200. Such input devices may include keyboard, mouse, trackpad, microphone, accelerometer, proximity sensor, GPS, and/or other input devices. System 200 may also include or connect to one or more output devices controlled by system 200 to output information. Such output devices may include devices such as a display (e.g. a LCD, LED, touch screen, or other display device), speaker, vibration module, LEDs/other lights, and/or other output devices. System 200 may also include or connect to devices which may act as both input and output devices, for example memory devices (hard drives, solid state drives, disk drives, and/or other memory devices) which system 200 can read data from and/or write data to, and touch screen displays which can both display (output) data and receive touch signals (input).

By way of example, where system 200 is a client system such as 130 it may include a display 218 (which may be a touch screen display), a camera device 220, a microphone device 222 (which may be integrated with the camera device), a cursor control device 224 (e.g. a mouse, trackpad, or other cursor control device), a keyboard 226, and a speaker device 228.

System 200 also includes one or more communications interfaces 216 for communication with a network, such as network 140 of digital design platform 100 (and/or a local network within the server environment 110). Via the communications interface(s) 216, system 200 can communicate data to and receive data from networked systems and/or devices.

System 200 may be any suitable computer processing system, for example, a server computer system, a desktop computer, a laptop computer, a netbook computer, a tablet computing device, a mobile/smart phone, a personal digital assistant, or an alternative computer processing system.

System 200 stores or has access to computer applications (also referred to as software or programs) - i.e. computer readable instructions and data which, when executed by the processing unit 202, configure system 200 to receive, process, and output data. Instructions and data can be stored on non-transitory computer readable medium such as 210 accessible to system 200. Instructions and data may be transmitted to/received by system 200 via a data signal in a transmission channel enabled (for example) by a wired or wireless network connection over an interface such as communications interface 216.

Typically, one application accessible to system 200 will be an operating system application. In addition, system 200 will store or have access to applications which, when executed by the processing unit 202, configure system 200 to perform various computer-implemented processing operations described herein. For example, and referring to the networked environment of FIG. 1 above, server environment 110 includes one or more systems which run a digital design application 114, and a data storage application 116. Similarly, client system 130 runs a client application 132.

In some cases part or all of a given computer-implemented method will be performed by system 200 itself, while in other cases processing may be performed by other devices in data communication with system 200.

### Data structure for training data

The following section describes data structures employed by the digital design application 114 and in particular the training module 120 to store training data. The data structures and fields described are provided by way of example. Depending on the implementation, additional, fewer, or alternative fields may be used. Further, the fields described in respect of a given data structure may be stored in one or more alternative data structures (e.g. across multiple linked data structures). Further, although tables are used to illustrate the data structures, the relevant fields/information may be stored in any appropriate format/structure.

Data in respect of a training datapoint may be stored in various formats. An example data format that is used throughout this disclosure will now be described. Alternative design data formats (storing alternative training data attributes) are, however, possible, and the processing described herein can be adapted for alternative formats.

In the present context, data in respect of a given training datapoint is stored in a training datapoint record. Generally speaking, a training datapoint record defines certain training data attributes and includes an intent object and two design snapshots - i.e., a before and an after design snapshot. The intent object data includes an intent identifier and intent text. Each snapshot includes a snapshot identifier.

In the present example, the format of each design record is a device independent format comprising a set of key-value pairs. To assist with understanding, a partial example of a raw training datapoint record is as follows:

**Table A: an example raw data record**

| **Key/field** | **Example** |
|---|---|
| Training datapoint ID | ID: "abc123", |
| Intent ID | Intent_id_1 |
| Intent text | Prompt: 'Design a birthday card for my friend Mary for her 20th birthday' |
| Snapshot_before | Snapshot_id_1 |
| Snapshot_after | Snapshot_id_2 |

In addition, in some embodiments, the snapshot data can include an action field indicating an action performed to achieve a corresponding intent and a metadata field that stores metadata associated with the design snapshot. The metadata may include, e.g., identifiers of the design elements present in the design, identifiers of any design templates used, etc. It will be appreciated that the metadata may include any other information associated with that design. In addition, the snapshot data may also include a motivation field indicating a motivation behind the action performed. To assist with understanding, a partial example of such a training datapoint record is as follows:

**Table B: another example of a raw data record**

| **Key/field** | **Example** |
|---|---|
| Training datapoint ID | ID: "abc123", |
| Intent ID | Intent_id_1 |
| Intent text | Prompt: 'Design a birthday card for my friend Mary for her 20th birthday' |
| Snapshot_before | Snapshot_id_1 |
| Action_snapshot_before | Add a birthday themed template ID |
| Metadata_snapshot_before | Any metadata associated with design snapshot |
| Motivation_snapshot_before | This template signifies youth |
| Snapshot_after | Snapshot_id_2 |
| Action_snapshot_before | 'Add a basic birthday message' |
| Metadata_snapshot_before | Any metadata associated with design snapshot |
| Motivation_snapshot_after | This message drives engagement and is in keeping with the young adult theme |

It will be appreciated that in some cases a training datapoint record may be part of a sequence of training datapoints related to a single design. In such cases, the training datapoint record may include a field that indicates the design the training datapoint belongs to and the position of the datapoint within that sequence. For example, the training datapoint identifier may be formatted to include a unique identifier of the design/sequence and the position of the training datapoint within that sequence (e.g., sequenceID_position#: 'abc123_4'). In other examples, two additional fields may be added to the data record to include a design identifier and a position identifier. Further, in cases where datapoints are related to a design/sequence, each training datapoint may be stored individually or the training datapoints related to a design/sequence may be stored together in a single design-level record.

In other cases, multiple training datapoints may be associated with the same intent object. In such examples, the training datapoint identifiers may be different but multiple training datapoints may include the same intent identifiers and intent text. Further, in such cases, training datapoints may be stored individually or the training datapoints related to the same intent object may be stored together in a single intent-level record.

### Example methods

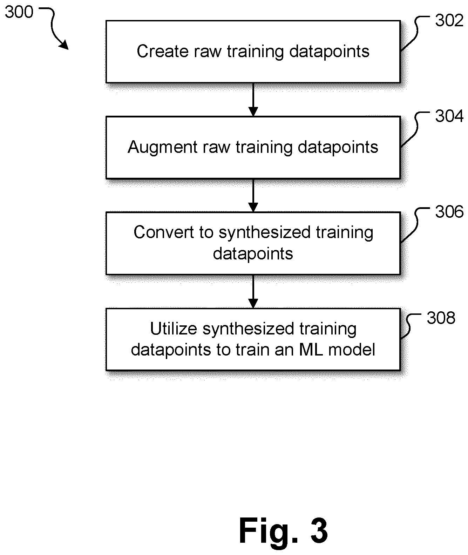

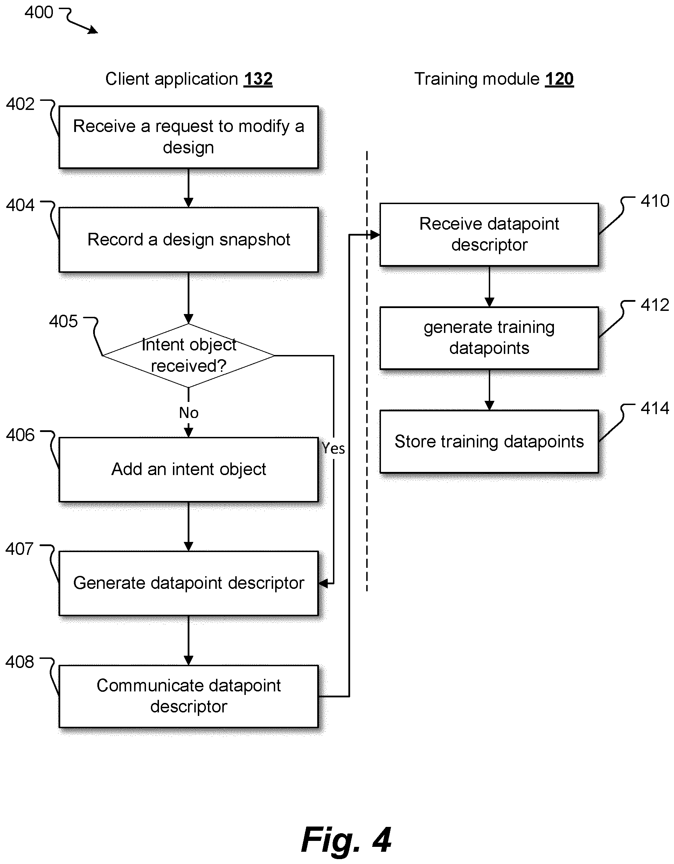

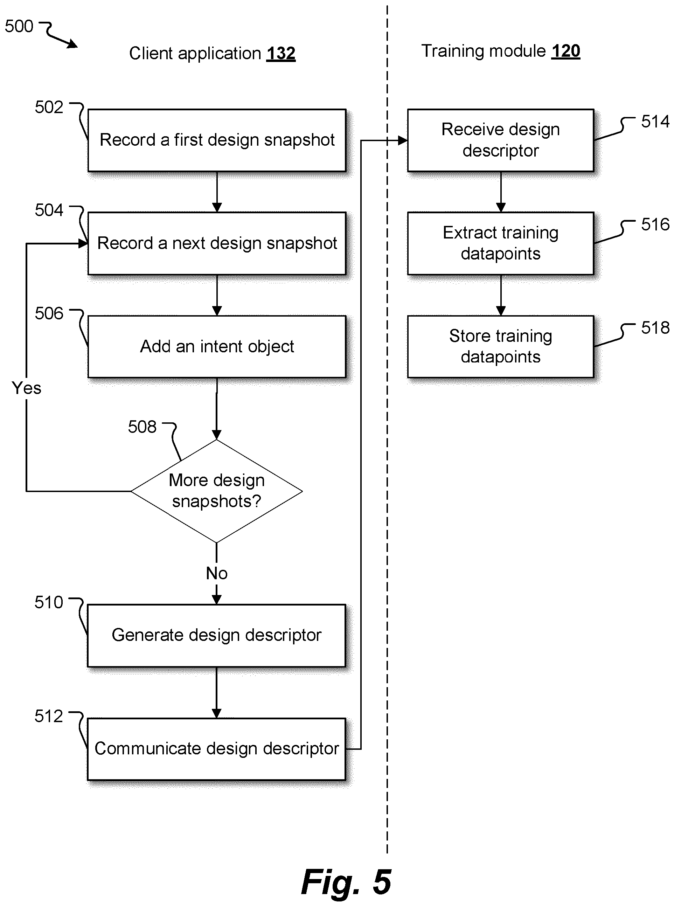

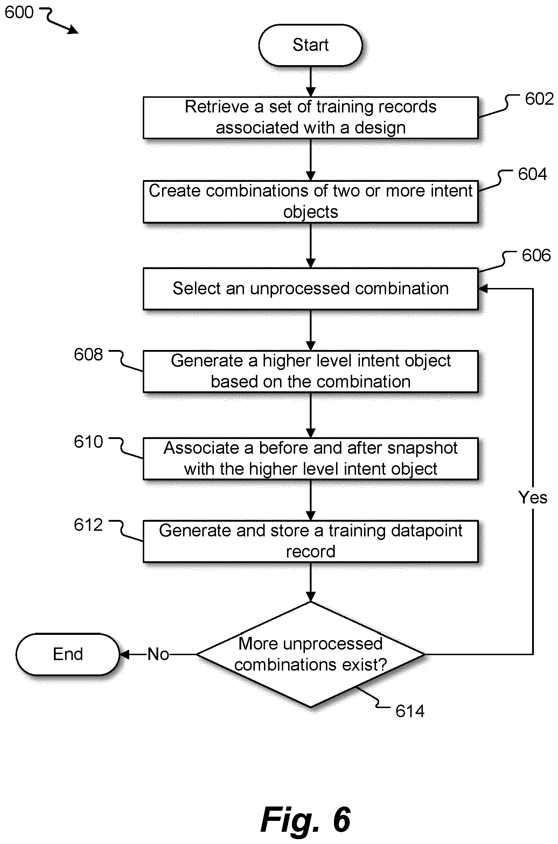

Various methods and processes for generating and augmenting training data will now be described. In particular, Fig. 3 illustrates an example process for training an ML model, Fig. 4 illustrates one example method for generating training data, Fig. 5 illustrates another example method for generating training data, and Fig. 6 illustrates an example method for augmenting training data.

FIG. 3 illustrates an example method 300 for training an ML model 118 to output one or more design edits in response to an input user prompt or intent.

The method commences at step 302, where raw training datapoints are created. As described previously, the raw training datapoints can be created in numerous ways. In an example technique, designers can generate designs from start to finish. As they generate the designs they can either be provided one or more intent obj ects or they can create their own intents. For each intent object, the designers can generate a design snapshot that fulfils the corresponding intent object during the design process. This process is described in further detail in Fig. 5. In another example technique, designers can be provided a first snapshot of a design. They can then create additional snapshot(s) of the design as they update the first snapshot to fulfil corresponding intent object(s) that are either provided by the system or generated by the designer themselves. This process is described in detail with reference to Fig. 4.

Once raw training datapoints are generated, the datapoints are augmented at step 304. To do this, the training module 120 applies different permutations and combinations to combine two or more intents associated with a particular design sequence and then aggregates the combined intents to generate higher level intents. The training module 120 also associates before and after design snapshots with each of the generated higher-level intent objects. The before and after design snapshots may be taken from the before and/or after snapshots of one or more intent objects that were combined to create the higher-level intents. The method for augmenting the datapoints is described in detail with reference to Fig. 6.

At step 306, the raw training datapoints can be converted into synthesized training datapoints. To convert the raw datapoints into the synthesized datapoints, aspects of the present disclosure identify the design edits made to the design based on the two design snapshots of the raw datapoint. This can be done in various ways. For example, the before and after design snapshots can be compared to identify the differences between the two snapshots and the differences can be the design edits performed to achieve the corresponding intent object.

Finally, the synthesized training datapoints are utilized to train an ML model at step 308.

Fig. 3 illustrates an example method where raw training datapoints are converted into synthesized training datapoints and the synthesized training datapoints are used to train an ML model. In other embodiments, the training datapoints may be directly utilized to train the ML model. In such cases, step 306 is not performed. Instead, the intent objects and the corresponding before and after snapshots are directly fed to the ML model for training. Further, in such cases, the raw training datapoints are simply referred to as training datapoints.

Fig. 4 illustrates an example method 400 for generating training datapoints according to one embodiment of the present disclosure. In particular, Fig. 4 illustrates a method for generating training datapoints based on a seed or initial design snapshot. The method commences at step 402 where a client device and in particular a client application 132 receives a request to modify a design from the training module 120. The request to modify the design may include a request identifier (e.g., that uniquely identifies the request), and a 'before' design snapshot, i.e., a design that needs to be edited.

In some embodiments, the request may also include an intent object that indicates the edits to be made to the 'before' design snapshot. In other embodiments, the request may not include any intent objects. In case an intent object is provided, the training module 120 may generate the intent object in various ways. In some examples, the training module 120 may monitor or store any user prompts made by users of the design application 114 when they are performing searches for designs. It may then analyse the frequency or and/or recency statistics of the user prompts. Any user prompts that are repeated more than a threshold number of times in a threshold number of days can be selected as an intent object. For example, if a threshold number of users enter a prompt such as "professional Instagram post about Jewellery" the training module 120 may create an intent object based on this prompt. Further, the training module 120 may select one or more of the design templates that is displayed by the design application 114 in response to this user prompt as the before design snapshot.

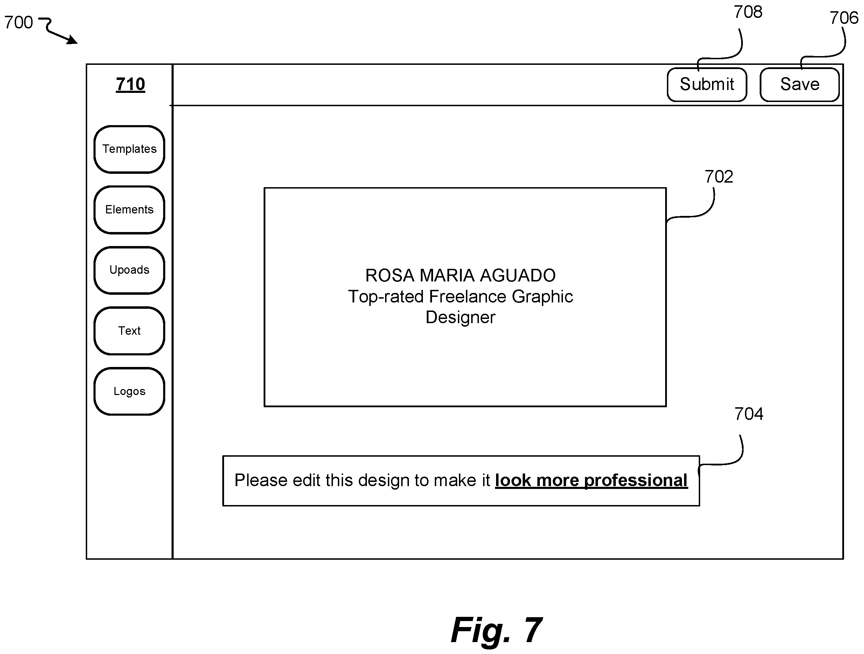

Once the client application 132 receives the request to modify the design, it may generate and display a graphical user interface (GUI) on the display of the client device. Fig. 7 illustrates an example GUI displayed by the client application 132 at step 402. The GUI 700 includes the before snapshot 702 received in the request and an instruction 704 to process the request. In some examples, the instruction 704 may be generated based on the intent object received with the request. In other examples, the instruction 704 may be more general, e.g., "please edit this design as you like". Further still, the GUI 700 includes a selectable affordance 706 for saving the design once the user has edited/modified the design.

The GUI 700 also includes a type selection area 710 and a preview area (not shown). The type selection area 710 displays a plurality of type selection controls, through which design assets are made available to the user by the server environment 110. In the illustrated embodiment, the type selection area 710 displays type selection controls for Templates, Elements, Uploads, Text, and Logos. The type selection controls may be activated by a user to select a particular type of design asset. Upon activation, a preview of the selected design asset is displayed in preview area.

If the user selects a design element type (e.g., the Templates selection control), the GUI 700 displays a plurality of design templates in the preview area. The user can select and/or search for a desired template. Upon selection of the template, the selected template is applied to the before design snapshot 702. Similarly, if the user selects the 'Elements' or 'Text' type from the selection area 710, the corresponding elements (e.g., images, videos, audio files, etc.) or text options are displayed in the preview area and selection of any design element or text causes the selected design element or text to be added to the before snapshot 702.

Using the GUI 700, the user may add one or more design elements to the 'before' snapshot 702 to meet the provided or user selected intent object. Further, the user may be able to move, rearrange, and/or remove design elements from the design snapshot. Once the user is satisfied that they have edited the 'before' snapshot 702 sufficiently to meet the intent object, the user may save the design by selecting the affordance 706.

At step 404, the client application 132 records the 'after' design snapshot. In some embodiments, when the user selects the 'Save' affordance 706, the client application 132 saves the design in that form as an 'after' design snapshot and assigns a unique identifier to the saved design snapshot. Further still, in some embodiments, the GUI 700 may include another selectable affordance 708 for submitting the design. In case this additional affordance 708 is provided, users may be allowed to make additional changes to the design even after they have selected the 'Save' affordance 706. If the user makes additional changes and then resaves the design, the client application 132 discards or replaces the previous after design snapshot with the newly saved version of the design. In other examples, the GUI 700 may include a single affordance for saving and submitting the design, in such examples, the user may not be allowed to make further changes to the design after they have selected the `Save' affordance 706. Instead, a message may be displayed to the user requesting the user to confirm that they do not wish to make any other changes to the design.

In some embodiments, when the design snapshot is recorded, metadata associated with the design, such as, e.g., identifiers of design elements, identifiers of design templates, font sizes and colours, and other such design related information may be stored in association with the design snapshot.

Once the design snapshot is recorded, the method proceeds to step 405, where the client application 132 determines whether an intent object was received as part of the request at step 402. If the client application 132 determines that an intent object was not received as part of the request, the method proceeds to step 406, where an intent object is saved in association with the recorded snapshot.

In some examples, when the user selects the 'Save' or 'Submit' affordance, the client application 132 generates and displays a pop-up window to request the user to provide an intent. The pop-up window may include an input form to receive a user input. The input form may have any suitable form. For example, it may be a text editor that allows a user to enter any free text to define the intent for the changes the user has made to the design, or a drop-down menu (with predefined options) from which the user can select an intent for the changes the user has made to the design. The intent may be a low-level or granular intent, such as, e.g., `adding text' or `deleting design element' or it can be a high-level intent, such as, e.g., `make the design more professional' or `make the design more vibrant'. Once the user provides the intent, the client application saves it as an intent object.

Next, at step 407, the client application 132 generates a datapoint descriptor. The datapoint descriptor may include information such as a request identifier (associated with the request received at step 402) and an identifier of the recorded snapshot (that was created by the client application when the design snapshot was recorded).

An example of a datapoint descriptor is displayed in table C below -

**Table C - example datapoint descriptor**

| | |
|---|---|
| Request ID | Abc123 |
| Snapshot_ID | Abc123_snapshot_1 |

Although the descriptor example above is shown with a request identifier and snapshot identifier, this need not be the case in all implementations. In some embodiments, the descriptor may additionally include one or more of an identifier of the intent object (provided in the request or saved at step 406), an identifier of the before design snapshot 702, the intent text, and/or any metadata associated with the before and/or after design snapshots.

At step 408, the datapoint descriptor is communicated to the training module 120 along with the recorded design snapshot.

At step 410, the training module 120 receives the datapoint descriptor along with the recorded design snapshot.

At step 412, the training module 120 saves the after design snapshot in the data storage 128 (along with any metadata associated with the design snapshot) and generates a training datapoint record (e.g., as shown in table A or B) using the datapoint descriptor. The manner in which the training module 120 generates the training datapoint depends on the information available in the datapoint descriptor. If the datapoint descriptor includes the intent object identifier, intent object text, the before snapshot identifier and the after snapshot identifier, the training module 120 may extract all of these fields and create the training datapoint record. Alternatively, if the datapoint descriptor only includes the identifier of the after snapshot, the training module 120 retrieves the intent object identifier, the intent object text, and the before design snapshot identifier from the data storage 128. In one example, it may extract the request identifier from the datapoint descriptor and use this to retrieve the request associated with that identifier from the data storage 128. From the request, the training module 120 can extract the required information - e.g., the intent object identifier, the intent object text, and the before snapshot identifier. It may then add these values to the training datapoint record and save it in the data storage 128.

Returning to step 405, if the client application 132 determines that the intent object was received in the request to modify the design, the method directly proceeds to step 407.

The method 400 can be repeated multiple times using the same request. That is, the same request may be communicated to multiple client systems 130. When the intent object is provided as part of the request, as each user thinks differently, it is likely that the 'after' design snapshots created by different users will be different for the same intent object and the same 'before' design snapshot. This way, the training module 120 can collect multiple different training datapoints for the same intent object, which can be used to train the ML model to be able to eventually generate a variety of potential design edits for the same input prompt. The method 400 is also repeated multiple times using different requests. That is, requests based on different before design snapshots (with or without intent objects) can be communicated to multiple client systems 130 and method 400 can be performed multiple times to generate a large set of training datapoints.

Fig. 5 illustrates another example method 500 for generating training datapoints. In particular, Fig. 5 illustrates a method 500 for generating training datapoints without a seed design snapshot. The method commences at step 502, where a client application, e.g., client application 132 records a first design snapshot. In some examples, a user of the client application 132 may be on a homepage associated with the design application and/or may be viewing an editor GUI of the design application, which includes a selectable affordance to commence a snapshot mode of editing.

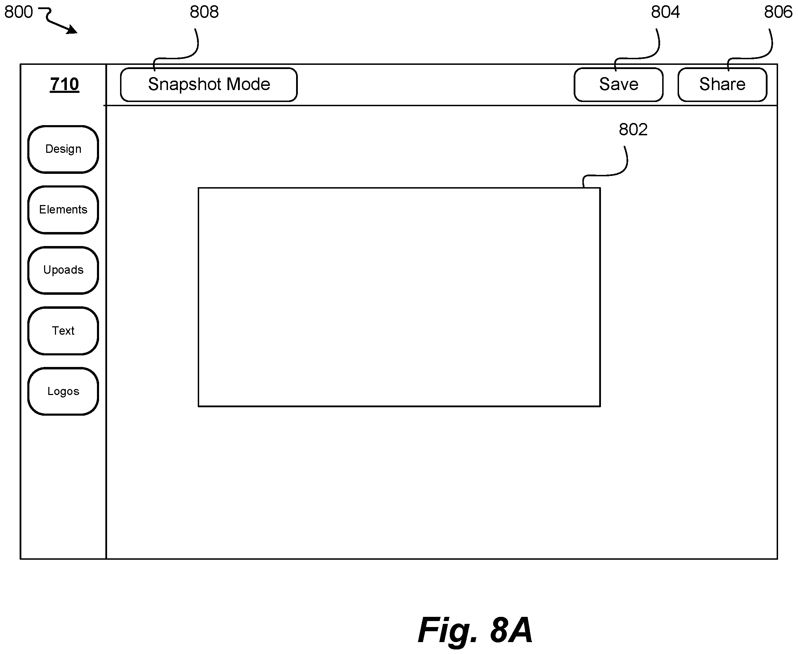

An example of such an editor GUI 800 is displayed in Fig. 8A. As shown, the GUI 800 includes a type selection panel 710, a preview area showing a plain canvas 802, a selectable 'share' control 806 to share a design, a selectable 'save' control 804 to save the design, and a selectable 'snapshot mode' control 808 to select a snapshot mode. The user may use the GUI 800 to create/modify designs. If the user selects the affordance 808 for the snapshot mode, a GUI may be displayed to commence the snapshot mode.

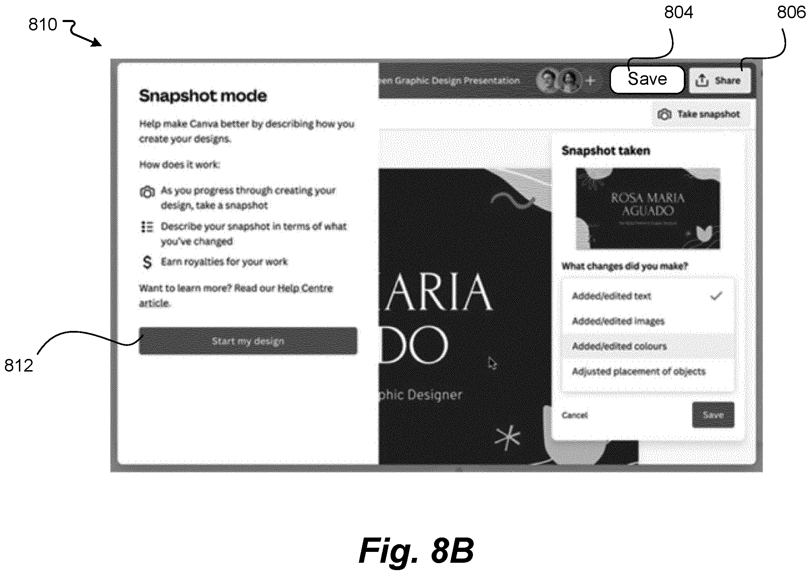

Fig. 8B illustrates this GUI 810. As shown in Fig. 8B, the GUI 810 includes some information about the snapshot mode, e.g., it provides some instructions on using the snapshot mode and includes a selectable control 812 to start designing in this mode. The user may close the GUI 810, in which case the user is returned to the normal editing GUI (e.g., GUI 800). Otherwise, if the user selects the control to start designing in the snapshot mode, a new GUI may be displayed on the client systems 130.

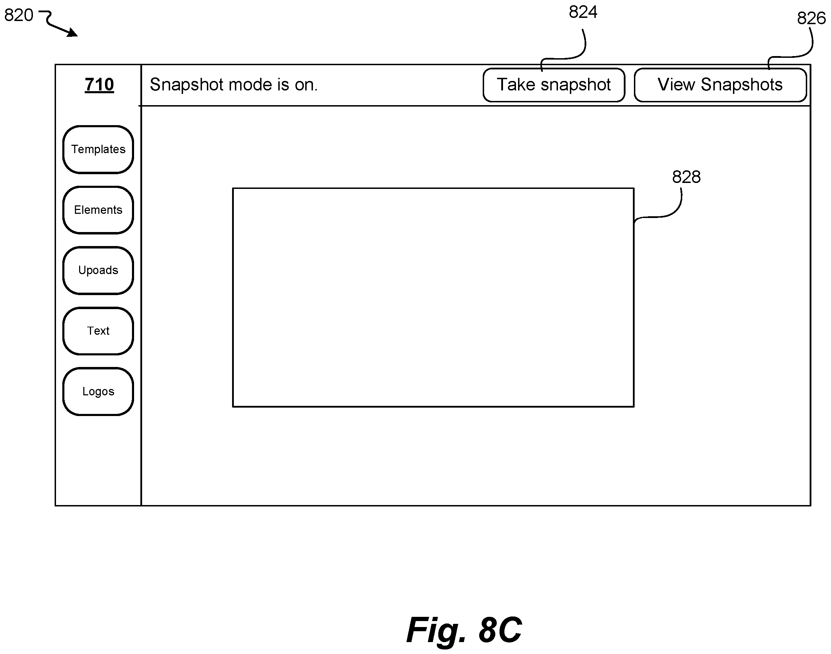

Fig. 8C illustrates this new GUI 820. As seen in Fig. 8C, the GUI 820 is similar to GUI 800. The only difference being in the top panel 822. This panel 822 now includes a message indicating that snapshot mode is on. It also includes two selectable controls - one for taking snapshots, i.e., the take snapshots control 824 and another to view snapshots, i.e., the view snapshots control 826. When the snapshot mode is first initiated, the client application 132 may save a snapshot of the blank canvas 828 as the initial snapshot.

The method proceeds to step 504, where a next design snapshot is recorded. Once the user has entered the snapshot mode, the user may commence editing the design. As and when the user makes changes to the design, the user may select the `Take snapshot' control 824. For example, if the user adds a text element to the design 828 and modifies the template text to a desired text, the user may select the `Take snapshot' control 824. When the user selects the take snapshot control 824, the client application 132 records the state of the design 828 at the time the control 824 was selected as a design snapshot and adds it to a list of design snapshots recorded for that design. The client application 132 also assigns an identifier to the recorded snapshot. The identifier may be a sequential number indicating the order of the snapshots. For example, the first snapshot (recorded at step 502) can be assigned an identifier of 1. The next snapshot can be assigned an identifier of 2, and so forth.

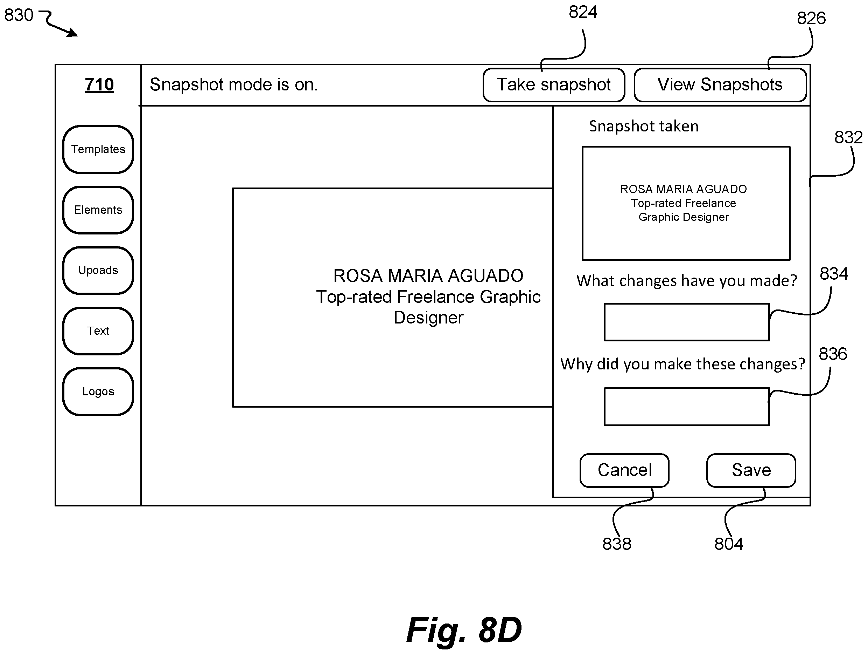

Next, at step 506, the client application 132 saves an intent object in association with the recorded snapshot. In some examples, when the user selects the `Take snapshot' control 824, the client application 132 generates and displays a second user interface to request the user to provide information about the snapshot. Fig. 8D illustrates the state of the GUI when the user selects the `take snapshot' affordance 824. As seen in this Fig. 8D, the second user interface 832 includes one or more input controls 834-836 to receive a user input. Input control 834 is to receive an intent object and input control 836 is to receive a motivation for the design edits made by the user. In this example, the input controls 834 and 836 are free text editors that allow a user to enter any free text to define the changes the user has made to the design since the last snapshot and why they made those changes. In other examples, the input controls may be in the form of drop-down menus (with predefined options) from which the user can select one or more changes and/or one or more motivations. In other examples, the second user interface 832 may include additional input controls - e.g., to indicate the element of the design on which the action was performed (e.g., text, image, background, design element, etc.). Save and Cancel controls may also be provided in the user interface 832 to allow the user to save the snapshot or to cancel the action.

In the example depicted in Fig. 8D, the user interface 832 is shown as a pop-up window that is displayed above and covering a portion of the user interface 820. In other examples, the second user interface 832 may be displayed as a side panel or a bottom panel in relation to the user interface 820 being displayed in a main panel. In still other examples, the second user interface 832 may replace the user interface 820, such that only the second user interface 832 is displayed on the user screen.

In any event, the GUI 832 allows the user to provide information about the change(s) the user has made to the design between the previous snapshot and the current snapshot. Once the user enters the change(s) in the input form 832 and selects the 'Save' affordance 804, the client application 132 creates and saves an intent object using the information entered by the user.

For example, if the user indicates that they have added text and done so because the added text increases engagement, the client application 132 creates an intent object `Adding text', a motivation objection `increases engagement' and saves these in a newly created training datapoint (e.g., with a unique identifier). The client application 132 also associates the current design snapshot and the previous design snapshot with the saved training datapoint and assigns an identifier to the intent object. The identifier may be a sequential number indicating the order of the intent objects. For example, the first recorded intent object can be assigned an identifier of 1. The next recorded intent object for that design can be assigned an identifier of 2, and so forth.

Next, a determination is made if more design snapshots are required. Once the user selects the 'save' affordance 804 (or the 'cancel' affordance 838), the user interface 832 is closed and the user is returned to the GUI 820. The user may then continue to update the design or the user may decide that no more updates are required.

If the user continues to update the design and selects the `Take snapshot' affordance again, the client application 132 determines that more design snapshots are required and the method proceeds to step 504, where the next design snapshot is recorded and to step 506 where the intent object and/or motivation object are added (as described above).

Alternatively, if the user selects the 'Save' affordance 804 or the 'Share' affordance 806, the client application 132 determines that no more design snapshots are required, and the method proceeds to step 510 where the client application 132 requests the user to provide summary details for the design edits.

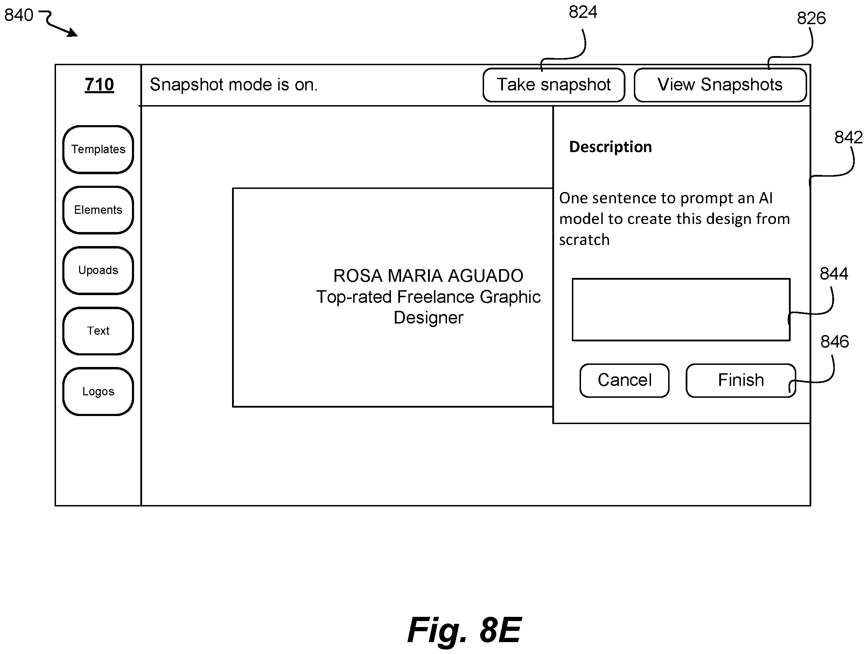

Fig. 8E shows a GUI 840 for receiving user summary details. The GUI 840 includes a user interface 842 with an input control 844. A user can input a description of the design in the input control 844. In one embodiment, the user interface 842 may request the user to input a sentence to describe the design that could be used to prompt an AI model to create the design from scratch. Once the user enters the summary details, the user can use the 'finish' control 846 to indicate that no more design snapshots are required and the client application 132 generates a design descriptor.

The design descriptor includes identifiers and text for each of the intent objects saved by the client application 132 and the identifiers of the design snapshots associated with each of the intent objects. In some embodiments, it may also include the summary statement (if provided). An example of the design descriptor is displayed in the table below -

**Table D - Example design descriptor**

| |
|---|
| ```
        'intents': [
            {
              'intent_id_1': {
                'intent text': 'Add text',
                 'motivation text:' 'increase engagement'
                'snapshot_before': 'snapshot_id_1',
                'snapshot after': 'snapshot_id_2'
``` |
| ```
              }
            },
            {
              'intent_id_2': {
                 'intent text: 'Changed background color.',
                'motivation text:' 'make design more fun'
                'snapshot_before': 'snapshot_id_2',
                'snapshot_after': 'snapshot_id_3'
            } },
            {
              'intent_id_3': {
                'intent text': 'Added design elements.',
                 'motivation text:' 'make design more professional'
                'snapshot _before': 'snapshot id_3',
                'snapshot_after': 'snapshot _id 4'
              }
            },
              'summary text': 'the design includes a blue background with multiple
        coloured balloons in a punchy colour and includes text indicating a birthday party
        for a 20 year old woman'
          ]
        }
``` |

At step 512, the design descriptor is communicated to the training module 120 along with all the recorded design snapshots.

At step 514, the training module 120 receives the design descriptor along with the recorded design snapshots.

At step 516, the training module 120 saves the design snapshots in the data storage 128 (along with any metadata associated with the design snapshots) and generates one or more training datapoint records (e.g., as shown in table A or B) using the design descriptor. The manner in which the training module 120 generates the training datapoint depends on the manner in which training datapoints are to be stored. If each individual intent object (and associated snapshots) is supposed to be stored as an individual training datapoint, the training module 120 may be configured to extract each intent object and corresponding before and after design snapshot information from the design descriptor, and generate a training datapoint record identifier for each intent object. In this case, the training module 120 may update the intent object identifiers such that it is possible to identify which design a given training datapoint record is associated with. For example, it may assign a unique identifier to the design and add this design identifier to each object intent identifier received from the client system 130. Alternatively, it may add a new design identifier field in the training datapoints such that it is possible to retrieve all the training datapoints associated with one design.

At step 518, the training module 120 stores the extracted information against each training datapoint record identifier as individual records in the data storage 128.

The method 500 is repeated multiple times for different designs by different client devices and/or users - e.g., method 500 is repeated whenever a user selects the snapshot mode (e.g., see Fig. 8A and 8B).

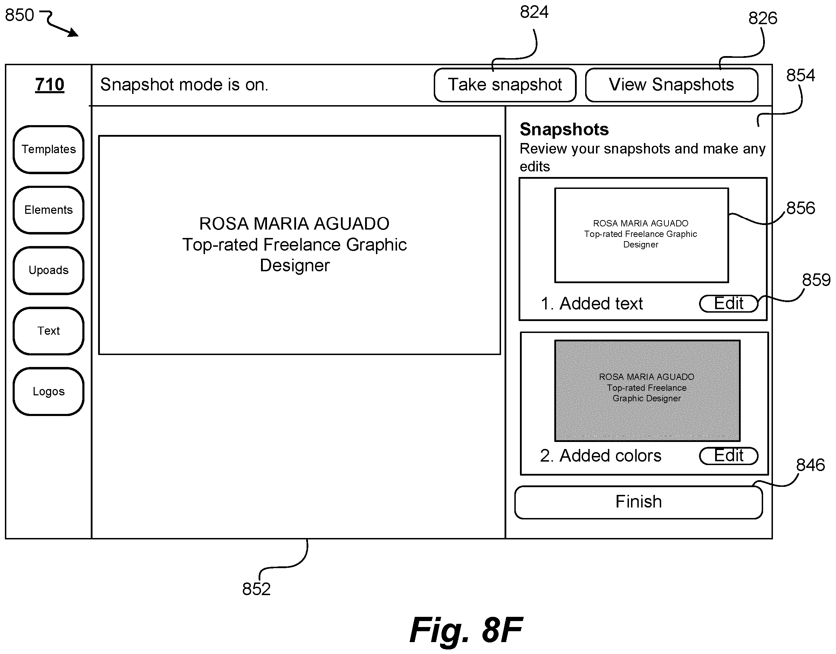

In addition to allowing users to take design snapshots, the GUI 820 allows users to view the saved design snapshots at any time while the user is creating the design or has finished creating the design. Fig. 8F illustrates the GUI that is displayed when the user selects the `View snapshots' affordance 826 in GUI 820. As seen in Fig. 8F, the GUI 850 includes a preview pane 852 that displays a selected design snapshot and an edit pane 854 that displays all the snapshots recorded by the user. In some examples, for each snapshot, the edit pane 854 shows the snapshot 856 and the intent 858 and/or motivation (not shown) recorded by the user for that snapshot. An edit affordance 859 is also provided. The user may select the edit affordance 859 if the user wishes to edit one or more of the intents. Once the user is satisfied with the edits, the user may select the finish affordance 846 - this may cause step 510 to be performed.

It will be appreciated that in method 500, the user decides when a snapshot should be taken. However, users may sometimes forget to take snapshots when they make changes. Accordingly, in some embodiments, the client application 132 may automatically and periodically take snapshots of the design while the user is creating the design. In other embodiments, the client application 132 monitors the design and as the user makes changes to the design, the client application 132 automatically takes snapshots of the design.

In some examples, each time a snapshot is taken, the user may be prompted to provide a description and/or motivation of the changes made so that intent objects can be associated with each snapshot. Alternatively, the system may only prompt the user to provide a description and/or motivation of the changes made in each snapshot once the user has finished modifying the design. The user may also be allowed to delete snapshots, e.g., if the user believes there aren't sufficient changes between two consecutive snapshots, the user may delete one of the snapshots.

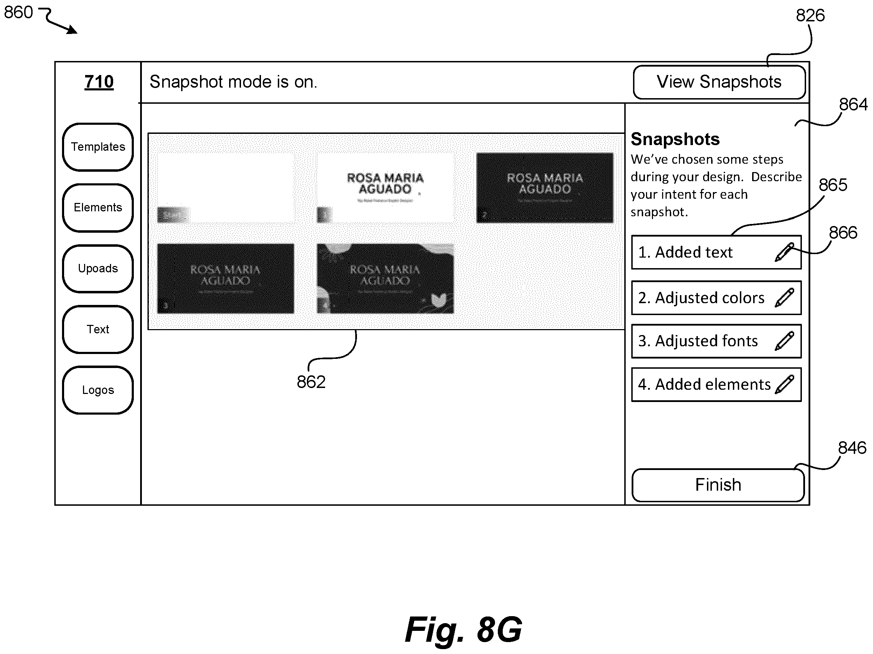

Fig. 8G illustrates an example GUI 860 that is displayed when a user selects the `View snapshots' affordance 826 in GUI 820 in the embodiment where the client application 132 automatically records snapshots at predetermined intervals and/or when changes are detected in the design. As seen in Fig. 8G, the GUI 860 includes a preview pane 862 that displays thumbnails of all the snapshots taken by the client application 132 during the design process. The GUI 860 also includes an edit pane 864 that displays all the intents 865 and/or motivations recorded for the corresponding design snapshots. The intents 865 may be automatically recorded by the client application 132 (e.g., if the client application 132 monitors the changes) or they can be provided by the user when the user views the snapshots. In any event, the user can edit any of the intents 865 and/or add motivations from the edit pane 864 by selecting a corresponding edit affordance 866. Once the user is satisfied with the edits, the user may select the finish affordance 846.

In method 400, an initial or 'before' design snapshot is provided and a user generates an 'after' design snapshot. In some embodiments, instead of generating just one 'after' design snapshot, the user may generate multiple design snapshots and corresponding intent objects after receiving the initial design snapshot. This way, a user can add more granular or lower-level intent objects and corresponding snapshots to show more granular edits made to the design.

In such embodiments, the user interface 700 may include additional functionality to allow the user to take additional design snapshots, add intent objects, and/or view the snapshots. That is, it may include the interactive `Take snapshot' 824 and `View snapshot' 826 affordances. In addition, when the `Take snapshot' affordance 824 is selected, the UI 700 may display an input form to receive a user intent (e.g., as shown in Fig. 8D). In such embodiments, the method steps 404-412 of method 400 may be replaced by method steps 504-516 of method 500.

Further, in method 500, no initial design snapshot or intent object is provided. In alternative embodiments, an intent object, e.g., a high-level intent object such as "make a professional-looking design" or "make a humorous design" may be provided as an instruction in the user interface (e.g., in UI 820). In such cases, the provided intent object may be associated with or included in the design descriptor. Further, the intent object may also be associated with its own 'before' and 'after' design snapshots. In one example, the blank canvas 828 may be the 'before' snapshot and the final design snapshot may be the 'after' snapshot for the provided intent object.

Fig. 6 illustrates an example method 600 for augmenting training datapoints. In some embodiments, method 600 is performed using the training datapoints generated using methods 400 or 500 (or their variants) described above. That is, it is performed using training datapoints associated with designs generated by users from scratch. Further still, one cycle of the method 600 is performed on a set of datapoints related to a single design and the method can be repeated multiple times, each time with a different set of datapoints related to other designs. By using method 600, the training datapoints generated by method 500 can be augmented to generate additional training datapoints automatically. For example, if a design is associated with 6 training datapoints, method 600 can be implemented to add 21 additional training datapoints based on various combinations of those 6 training datapoints.

Method 600 commences at step 602, where the training module 120 retrieves a set of training data records associated with a single design. In one example, the training module 120 may perform a search for training records that have a design identifier field and then retrieve a first set of training records that are related to a first design identifier. In one example, the training module 120 may retrieve a set of 3 training records associated with a single design. The set of three training records include three intent objects, each associated with a before and after design snapshot.

Next, at step 604, the training module generates unique combinations of two or more intent objects from the set of training records. In one example, the training module 120 generates all possible ordered combinations of two or more intent objects. For example, if the set of training records included 6 intent objects, the training module 120 generates all possible distinct combinations of two intent objects, of three intent objects, of four intent objects, of five intent objects, and six intent objects.

It will be appreciated that the training module 120 generates ordered combinations of intent objects based on the position of the intent objects in the design sequence. For example, if a design includes three intent objects A, B, and C, the training module 120 generates combinations: A+B, B+C, A+C and A+B+C, but cannot generate out of sequence combinations such as, B+A, or C+A, or C+B, or A+C+B.

At step 606, an unprocessed combination from the set of combinations is selected. If a first loop of the method 600 is performed then a first combination from the set of combinations is selected (e.g., A+B), in the next loop, the next unprocessed combination from the set of combinations is selected and so forth. The training module 120 generates a training record for the selected combination. This includes generating a unique record identifier for that selection.

At step 608, a higher level intent is generated based on the combination of intent objects. This may be performed in various ways. In one example, intents of different levels may exist, including action level intents, goal level intents, strategy level intents, and aspirational level intent. In such cases, the intents generated during process 500 may be considered layer one intents or action level intent - i.e., intents that specify the action that was performed during a change (examples include `moving box from right to centre', `aligning design elements vertically', etc). Method 600 may generate higher level intents such as layer two, layer three, or layer four intents. A layer two intent may also be referred to as goal level intent and it may specify the goal achieved by making corresponding changes (examples include `restructuring a design by moving design elements around'). A layer three intent may also be referred to as a strategy level intent and it may specify the design strategy for making corresponding changes (examples include `employ a mix of color and typography to catch attention and make message memorable'). A layer four intent may also be referred to as an aspirational level intent and it may specify the aspiration or motivation to for making corresponding changes (examples include `making this design look more professional'). It will be appreciated that these specific intent levels are merely exemplary and in implementation any number and type of hierarchy intent levels may be employed without departing from the scope of the present disclosure.

In some embodiments, the training module 120 generates higher-level intents by using a machine learning (ML) model that is configured to analyse two or more intent objects and convert them into a single higher-level intent object. To this end, the ML model may be trained to identify the meaning of intent objects, determine the intent level of the intent objects and then generate higher level intent objects based on the combination of the two or more intent objects. For example, consider the intent objects: ADDED TEXT and ADDED DESIGN ELEMENTS. In this case, the ML model can determine that both intent objects are action level intent objects and it generates a goal or aspirational level intent object based on these intent objects. For example it may generate a higher-level intent object such as: GENERATE A BASIC DESIGN WITH TEXT AND DESIGN ELEMENTS.

In one example, a specific ML model may be utilized that is specifically trained to perform the task of converting combinations of lower level intent objects into higher level intent objects. In this case, an ML model may be fed copious amounts of training data initially to train it - e.g., it may be provided a large number of lower level intent objects and their corresponding expected higher level intent objects (e.g., hundreds of thousands of input/output labelled objects). The ML model may be trained on this data until it can accurately determine a higher level intent object for a given combination of lower level intent objects most of the time. Then, at execution time, a combination of intent objects (e.g., the combination selected at step 606) is provided to the trained ML model and it outputs a higher-level intent object.

In other cases, a pre-trained generalized language ML model (that can perform any language based task) may be utilized. An example of such a generalized language ML model is ChatGPT. The ML model in ChatGPT is trained on vast amounts of text data, such as books, articles, and other written works. This data is used to teach the model how to recognize patterns and relationships between words and phrases, and how to generate new text that sounds natural. Once the model has been trained on this data, it can be used to generate new text in response to any user input. As a generalized ML model of this type may not know the specific task of converting lower level intent objects into higher level intent objects, a prompt and a small amount of training data (e.g., 10-50 samples of intent objects and corresponding higher-level intent objects) may be provided to the ML model in order to teach the ML model to output expected higher level intent objects for given combinations of lower level intent objects. An example of a prompt and example training data is provided in the table below -

**Table E - Example prompt and training data**

| | | |
|---|---|---|
| Prompt | You are a digital designer focusing on designing a social media post. You have specified the below granular design intents in order. Summarize the granular intents into 4 higher level design goal intents, 2 even higher level design strategy intents and 1 highest level design aspiration intent. | |
| | | 1. Create a social media post for Father's day with a joke about erasers. |
| | | 2. Spread out the text boxes to make space for elements. |
| | | 3. Add cute illustrations that match the topic. |
| | | 4. Make the background a vibrant color. |
| | | 5. Give the text a handwritten style and change the color to white. |
| | | 6. Add a small graphic element to highlight the text. |
| Example desired output | Higher level design goal intents: | |
| | | 1. Compose an engaging Father's day post incorporating humour related to erasers. |
| | | 2. Incorporate vibrant color schemes and cute illustrations relevant to the theme. |
| | | 3. Utilize a handwritten text style with white color to evoke a personal touch. |
| | | 4. Arrange text boxes and graphic elements in a balanced manner to highlight the text. |
| | Higher level design strategy intents: | |
| | | 1. Employ a mix of color, illustration, and typography to catch attention and made the message memorable. |
| | | 2. Ensure the humour and Father's day message is clear and delightfully presented through visual and textual elements. |
| | Highest level design aspiration intent: | |
| | | 1. Create a visually captivating and emotionally resonant post that not only celebrates Father's Day but also engages the audience with humour and aesthetic appeal. |

In any event, the training module 120 outputs a higher level intent object at step 608. For instance, if the combination of intent objects includes two intent objects: MAKE THE BACKGROUND A VIBRANT COLOR and GIVE THE TEXT A HANDWRITTEN STYLE, the training module 120 may output a higher-level intent such as: MAKE THE CARD MORE CUTE AND PERSONALIZED. The training module 120 generates an object identifier for the higher level intent object and saves the object identifier and the text of the higher-level intent object in association with the record identifier generated at step 606.

At step 610, the training module associates a before and after design snapshot from the pool of design snapshots associated with the set of training records with the higher level intent. The design snapshots selected for the higher-level intent depend on the combination of intent objects selected at step 606. But generally speaking, the 'before' snapshot associated with the first intent object in the ordered combination is selected as the 'before' snapshot for the higher level intent object and the 'after' snapshot associated with the last intent object in the ordered combination is selected as the 'after' snapshot for this higher level intent object. For example, if intent objects A and B are selected at step 606, then the training module selects the 'before' design snapshot associated with intent object A as the 'before' design snapshot for the higher level intent object and the 'after' design snapshot associated with intent object B as the 'after' design snapshot for the higher level intent object. On the other hand, if intent objects A+B+C are selected at step 606, then the training module 120 selects the 'before' design snapshot associated with intent object A as the 'before' design snapshot for the higher level intent object and the 'after' design snapshot associated with intent object C as the 'after' design snapshot for the higher level intent object.

At step 612, the training module 120 stores the identifiers of the associated 'before' and `after' design snapshots in association with the record identifier generated at step 606. In this manner, a new training datapoint is generated automatically by the training module 120.

At step 614 a determination is made whether any unprocessed combinations remain. If all combinations generated at step 604 have been processed, the method 600 ends. Alternatively, if one or more combinations remain unprocessed, the method returns to step 606 and steps 606-614 are repeated until all combinations generated at step 604 have been processed.

It will be appreciated that the training records generated by process 600 will also be associated with the same design identifier as the set of training records retrieved at step 602.

In the methods 300-600 described above, where client application 132 operates to display controls, interfaces, or other objects, client application 132 does so via one or more displays that are connected to (or integral with) system 200 - e.g. display 218. Where client application 132 operates to receive or detect user input, such input is provided via one or more input devices that are connected to (or integral with) system 200 - e.g. a touch screen, a touch screen display 218, a cursor control device 224, a keyboard 226, and/or an alternative input device.

Further, in the methods 300-600 described above, the client application 132 operates to display one or more GUIs. In those methods, instead of (or in addition to) displaying one or more of those GUIs, the client application 132 may output the corresponding information to the user in another format - e.g., the client application 132 may output the information presented in the GUI as a tactile output or as an auditory output. For example, in method 400, the request to modify the design may be output as GUI 700 and as auditory commands that describe the initial design snapshot and/or the associated instruction. Similarly, in method 500, one or more of the GUIs 800, 810, 820, 830, 840, 860, may be displayed along with tactile or auditory outputs or replaced by tactile or auditory outputs so as to also enable vision-impaired users to interact with the client application 132.

Further still, in the above embodiments certain operations are described as being performed by the client system 130 (e.g. under control of the client application 132) and other operations are described as being performed at the server environment 110. Variations are, however, possible. For example in certain cases an operation described as being performed by client system 130 may be performed at the server environment 110 and, similarly, an operation described as being performed at the server environment 110 may be performed by the client system 130. Generally speaking, however, where user input is required such user input is initially received at client system 130 (by an input device thereof). Data representing that user input may be processed by one or more applications running on client system 130 or may be communicated to server environment 110 for one or more applications running on the computer processing hardware 112 to process. Similarly, data or information that is to be output by a client system 130 (e.g. via display, speaker, or other output device) will ultimately involve that client system 130. The data/information that is output may, however, be generated (or based on data generated) by client application 132 and/or the server environment 110 (and communicated to the client system 130 to be output).

In the embodiments described above and the figures, various examples of how different types of GUI elements (and/or different GUI areas/regions) may be visually distinguished are provided. Alternative means for visually distinguishing GUI elements are possible. By way of example, techniques for visually distinguishing GUI elements may include one or a combination of: shading colours; shading patterns; line colours; line weights; line styles; transparencies; icons; character annotations; and/or other visual techniques.

In the present disclosure, processing is performed with respect to individual design pages. To this end, and unless stated otherwise, reference to a design herein is reference to a single page of a design. The techniques described herein may, however, be adapted to be applied to multi-page designs, for example by processing each page of a multi-page design separately.

Further, the present disclosure concerns replacing one or more graphic design elements in designs. As noted above, in some implementations a design may be able to have multiple pages. Where multi-page designs are possible, reference in the present disclosure to replacing an element in a design is (unless stated otherwise) to be understood as replacing an element in a particular page of a design. The particular page will, for example, typically be a page selected by a user - for example a page that has been selected and is displayed in a preview area of a UI displayed on a display 218 of the client system 130.

The flowcharts illustrated in the figures and described above define operations in particular orders to explain various features. In some cases the operations described and illustrated may be able to be performed in a different order to that shown/described, one or more operations may be combined into a single operation, a single operation may be divided into multiple separate operations, the function(s) achieved by one or more of the described/illustrated operations may be achieved by one or more alternative operations, and/or one or more operation steps may be omitted. Still further, the functionality/processing of a given flowchart operation could potentially be performed by (or in conjunction with) different applications running on the same or different computer processing systems.

The present disclosure provides various user interface examples. It will be appreciated that alternative user interfaces are possible. Such alternative user interfaces may provide the same or similar user interface features to those described and/or illustrated in different ways, provide additional user interface features to those described and/or illustrated, or omit certain user interface features that have been described and/or illustrated.

Unless otherwise stated, the terms "include" and "comprise" (and variations thereof such as "including", "includes", "comprising", "comprises", "comprised" and the like) are used inclusively and do not exclude further features, components, integers, steps, or elements.

Although the present disclosure uses terms "first," "second," etc. to describe various elements, these terms are used only to distinguish elements from one another and not in an ordinal sense. For example, a first candidate template could be termed a second candidate template or vice versa without departing from the scope of the described examples. Furthermore, when used to differentiate elements or features, a second candidate template could exist without a first candidate template. For example, a second user input could occur before a first user input (or without a first user input ever occurring).

It will be understood that the embodiments disclosed and defined in this specification extend to alternative combinations of two or more of the individual features mentioned in or evident from the text or drawings. All of these different combinations constitute alternative embodiments of the present disclosure.

The present specification describes various embodiments with reference to numerous specific details that may vary from implementation to implementation. No limitation, element, property, feature, advantage, or attribute that is not expressly recited in a claim should be considered as a required or essential feature. Accordingly, the specification and drawings are to be regarded in an illustrative rather than a restrictive sense.

## Claims

1. A method comprising:
forming a training dataset for a machine learning model by:
a) receiving a first intent object and two or more design snapshots associated with the first intent object, wherein the first intent object indicates an intended design outcome and the two or more design snapshots include at least a first design snapshot indicating an initial state of a design and a second design snapshot indicating a state of the design after the intended design outcome is achieved;
b) identifying one or more design edits made to the design based on the first design snapshot and the second design snapshot; and
c) generating a training datapoint based on the intent object and the identified one or more design edits.

2. The method of claim 1, further comprising repeating steps a)-c) multiple times for the same design to generate a sequence of the training datapoints; wherein each datapoint in the sequence is associated with the same design.

3. The method of claim 2, further comprising generating multiple sequences of the training datapoints for different designs.

4. The method of claim 1, further comprising repeating steps a)-c) multiple times for the same intent object.

5. The method of any one of claims 1-4, wherein the training datapoint further including a motivation for making the one or more design edits to the design.

6. The method of any one of claims 1-5, wherein forming the training dataset for the machine learning model further includes:
receiving a second intent object associated with the second design snapshot and a third design snapshot;
determining a third intent object based on a combination of the first intent object and the second intent object; and
associating with the third intent object the first design snapshot and the third design snapshot, wherein each of the first, second and third intent objects and their associated snapshots are included in the training dataset.

7. The method of claim 6, further comprising determining design edits associated with each of the first, second and third intent objects, wherein determining the design edits for each intent object is based on the design snapshots associated with that intent object.

8. The method of claim 6, wherein the third intent object is determined by an ML model.

9. The method of claim 8, wherein the third intent object is a higher level intent object than at least one of the first intent object and the second intent object.

10. The method of any one of claims 1-8, wherein the training dataset is used for training an ML model to output one or more design commands based on an input intent object.

11. The method of any one of claims 1-8, wherein the training dataset is used for training an ML model to output one or more design edits based on an input intent object.

12. The method of any one of claims 1-5, further comprising:
retrieving a first training datapoint and a second training datapoint from the sequence of training datapoints, the first training datapoint including the first intent object and the first and second design snapshots and the second training datapoint including a second intent object and third and fourth design snapshots;
combining the first intent object with the second intent object to generate a third intent object;
associating with the third intent object the first design snapshot and the fourth design snapshot; and
generating an additional training datapoint to include in the sequence of training datapoints, the additional training datapoint including the third intent object and the first design snapshot and fourth design snapshot.

13. A computer processing system including:
a processing unit; and
a non-transitory computer-readable storage medium storing instructions, which when executed by the processing unit, cause the processing unit to perform a method according to any one of claim 1-12.

14. A computer readable storage medium storing instructions executable by processing unit to cause the processing unit to perform a method according to any one of claims 1-12.
